# EUROPEAN PATENT SPECIFICATION

(11) **EP 0 625 963 B1**
(45) Date of publication and mention of the grant of the patent: **08.05.1996**
(21) Application number: 93903922.8
(22) Date of filing: 08.02.1993
(51) Int. Cl.: C04B 28/18, F17C 11/00, C10L 3/04

(54) **ASBESTOS-FREE POROUS MASS FOR ACETYLENE CYLINDERS**
Asbestfreie, poröse Masse für Azetylenzylinder
MASSE POREUSE SANS AMIANTE POUR BOUTEILLES A ACETYLENE

(30) Priority: 11.02.1992 IT MI920266
(43) Date of publication of application: 30.11.1994
(73) Proprietor: S.I.A.D. SOCIETA' ITALIANA ACETILENE & DERIVATI S.P.A., I-24100 Bergamo (IT)
(72) Inventor: CALEGARI, Ferruccio, I-24100 Bergamo (IT)
(74) Representative: Minoja, Fabrizio
(86) International application number: EP9300288
(87) International publication number: WO9316011

(56) References cited:
- EP-A- 0 264 550
- CA-A- 1 202 500
- US-A- 4 132 555
- US-A- 4 970 246

## Description

It has long been known that acetylene, given its thermodynamic characteristics, which make it unstable under certain conditions of temperature and pressure, is stored and sold in cylinders, dissolved in special solvents, usually acetone or dimethylformamide: Use is made of the high solubility of the said gas in the abovementioned solvents, which allow it to be handled very safely.

Acetone or dimethylformamide or solvents with analogous properties are normally absorbed on porous masses having a monolithic structure, which completely fill the acetylene cylinder. One of the principal functions of the porous mass consists in preventing possible strikeback of flames which may develop downstream from the cylinder, and to block, from the outset, acetylene decomposition phenomena inside the actual cylinder, initiated by external causes such as localised overheating or others.

It is therefore particularly important that such filling materials should not exhibit empty spaces, cavities or interstices which might initiate dangerous decomposition phenomena. On the other hand, however, the materials must possess high porosity to facilitate the absorption and the subsequent release of the acetylene when it is being used. The material must furthermore be incombustible, inert towards acetylene and its solvents, and light-weight, and must possess special strength properties which make it virtually unalterable, namely not prone to fissuring and disintegrating to powder over the course of years.

Very good results have been obtained with masses having a silico-calcium composition, forming the subject of various patents, with the addition of binders, asbestos being particularly preferred, which impart to the whole a support skeleton with the twofold purpose of improving the strength and plasticity of the final mass and of maintaining the various constituents in suspension in the fluid mixture, from the stage of preparation of the mixture through to the stage of setting in the subsequent oven-baking stage.

Certain recent patents (EP 56,645; EP 64,916; EP 262,031; USP 4,970,246) propose replacing the asbestos (which is known to have toxic properties) with other fibres, with or without addition of suspending agents and thickeners necessary to maintain uniform fibre distribution and to avoid sedimentation of the solids prior to oven-setting.

The present invention relates to the preparation of a porous mass of silico-calcium composition, free from asbestos and containing inorganic synthetic fibres based on carbon and, optionally, vermiculite and mineral substances having colloidal properties.

These inorganic synthetic fibres based on carbon, widely used as a reinforcement in composite materials, are distinguished by their low weight, high resistance to chemical agents, high mechanical strength and excellent behaviour at high temperatures. They are commercially available in various grades and with various properties, depending on the method of preparation and on the subsequent treatments to which they have been subjected in order to impart particular properties. Further, their diameter and their length can vary within a range of values; fibres with a diameter of between 3 and 12 microns and a length of between 2 and 12 mm are normally used within the scope of the invention, though it is also possible to obtain good results with fibres of diameter and length different from those mentioned above. According to the invention, the content of inorganic synthetic fibres based on carbon is less than or equal to 12% by weight relative to the dry porous mass.

Certain specific surface treatments carried out on the fibre can be particularly useful in homogenising the mixture, just as a particular design and special configurations can improve its adhesion to the silico-calcium structure.

The dispersion and homogenisation of the fibres in the mixture can be facilitated by the optional use of additives having a dispersing and densifying action. Examples of such additives are cellulose derivatives, such as carboxymethylcellulose or hydroxypropylcellulose, and polyethers, such as polyethylene glycol. Additives of the inorganic type, having a thixotropic effect, which achieve the same objective, may also be advisable.

A further modification to the composition of the mixture can be made by adding to the normal components (consisting of water, lime, crystalline quartz powder and inorganic synthetic fibres based on carbon) a varying percentage, always less than 20%, of vermiculite which, in the expanded state, has interesting properties related to its lightness, non-combustibility and chemical inertness. Its crosslinked open granular structure gives the mass a low thermal conductivity and a high insulating power; its chemical inertness is such as to remain unaffected even after attack by strong alkalis, of which lime is one, at high temperatures and pressures.

The particle size of the vermiculite can be chosen from among the various commercially available types, ranging from powder products to granular products with grain sizes of between about 1 and 10 mm.

In certain cases it may prove difficult to obtain homogeneous fixtures which do not give rise to sedimentation phenomena in the first baking stage, with dangerous formation of voids within the ogival space of the cylinder.

These disadvantages can be avoided by adjusting the composition of the mixture through addition of particular substances having a thixotropic effect.

Satisfactory results have been obtained with mineral substances such as aluminium/magnesium double silicates of a colloidal type which upon appropriate dispersion in water, with formation of a gel, give excellent thickening properties. Their percentage, calculated relative to the final dry product, is less than 13%.

The thickening produced avoids separation of the components of the mixture and ensures a homogeneous final composition in the porous mass.

Various grades are commercially available, marketed under original trade names, such as, for example, the "Attagel®" range, produced in the United States by Engelhard Corporation.

These products, essentially consisting of hydrated silicates of aluminium and magnesium, have a composition somewhat comparable to that of the silico-calcium mass and blend well with the said mass, giving homogeneous mixtures which after baking attain a high consistency.

According to the invention, the porous mass is prepared by mixing the lime into water (slaking of the lime) and stirring in the inorganic synthetic fibre based on carbon, the vermiculite (if used), the densifier and the crystalline quartz powder.

Once it has become homogeneous, the mixture is filled into the cylinders and then subjected to baking and to a final drying.

In certain preferred embodiments of the invention, the ratios of the ingredients are 1:1 - 1:1.3 in respect of calcium oxide and quartz powder; 1:0.5 - 1:0.09 in respect of quartz powder and vermiculite; and 1:2.6 in respect of densifier and quartz powder.

The abovementioned ratios do not imply a limitation, and a different combination of the ingredients does not fall outside the scope of the invention.

The examples which follow further illustrate the invention.

### Example 1

In a mixer provided with a multi-speed helical stirrer, 13.5 kg of quicklime are slaked in 70 kg of water at a temperature of 35°C, with gentle stirring. After 20 minutes, a further 30 kg of water are added and the hydration is continued for a further hour.

Thereafter, 1.5 kg of inorganic synthetic fibres based on carbon, the fibres having a length of 3 mm, are added slowly, a little at a time, and the mixture is homogenised for 15 minutes at high speed. The mixture is then completed by adding, under constant stirring, 280 g of a densifier and 14.1 kg of crystalline quartz powder.

After a further two hours, the very fluid and homogeneous mixture can be introduced directly into the cylinders which should then be immediately subjected to the subsequent baking stage under pressure at a temperature of 180°C.

After drying at 280°C, the mass obtained is homogeneous and has a density of 270 g/litre and a porosity of 91.4%. The compressive strength is between 30 and 45 kg/cm².

### Example 2

First, the milk of lime is prepared in accordance with the procedure illustrated in Example 1, by slaking 12.8 kg of quicklime in 103.2 kg of water at a temperature of 45°C. Thereafter, 3 kg of vermiculite are added, followed, in successive stages, by 1.2 kg of inorganic synthetic fibre based on carbon, 13.2 kg of crystalline quartz powder and 250 g of densifier. The stirring is continued at 150 revolutions per minute until the mixture is homogeneous. The procedure in total requires about 3 hours.

The porous mass obtained after baking has a density of 275 g/litre and a porosity of 89%. The vermiculite and the fibre are found to be perfectly distributed in the mass, the compressive strength of which is about 26 kg/cm².

### Example 3

18.6 kg of quicklime are treated in the mixer (with stirring at 70 revolutions per minute) with 140 kg of water at a temperature of 40°C. After a period of 1 hour 30 minutes, 1.63 kg of synthetic inorganic fibres based on carbon and having a chemically treated surface are added slowly, a little at a time, with the stirring being increased to 180 revolutions per minute for a further 15 minutes. After this time, 20.5 kg of crystalline quartz powder are added, with mixing continuing for a further hour at a lower speed. Finally, a colloidal suspension consisting of 3.1 kg of "Attagel®" and 17.7 kg of water are poured into the mixer, the said suspension having been prepared beforehand in a secondary mixer equipped with a high speed stirrer. A final stirring for 20 minutes suffices to obtain a homogeneous mixture which does not undergo sedimentation.

At the end of the procedure, the baked mass has a density of 260 g/litre and a compressive strength greater than 25 kg/cm².

## Claims

1. Monolithic porous mass free from asbestos, for filling acetylene cylinders, the mass being based on calcium silicate obtained from lime and crystalline quartz powder and containing a binder consisting of inorganic synthetic fibres based on carbon in a content less than or equal to 12% by weight relative to the dry mass and optionally vermiculite in an amount less than 20% by weight relative to the dry mass, with the optional addition of one or more dispersing and densifying agents, characterized in that said inorganic synthetic fibres based on carbon possess hydrophilic properties and have a rough surface.

2. Porous mass according to Claim 1, in which the densifying agent is attapulgite, in an amount of at most 13% by weight.

3. Process for the preparation of the porous mass according to Claims 1-2, characterized by the following stages:
a) treatment of calcium oxide with water at a temperature of from 20 to 60°C;
b) addition of inorganic synthetic fibres based on carbon, followed by homogenisation;
c) optional addition of a dispersing and densifying agent;
d) addition of crystalline quartz powder;
e) baking of the mass at 180°C; and
f) drying at 280°C,
in which stages b), c) and d) can also be carried out in different sequences.

4. Process according to Claim 3, in which the ratio of calcium oxide to crystalline quartz powder is between 1:1 and 1:1.3, the ratio of crystalline quartz powder to vermiculite is between 1:0.5 and 1:0.09 and the ratio of attapulgite to crystalline quartz powder is 1:2.6.

## Patentansprüche

1. Monolithische, asbestfreie, poröse Masse zur Füllung von Azetylenzylindern, wobei die Masse auf Calciumsilikat basiert, welches aus Kalk und kristallinem Quarzpulver erhalten wurde, und ein Verbindungsmittel, das aus anorganischen, synthetischen Fasern, basierend auf Kohlenstoff, besteht, mit einem Gehalt von weniger oder gleich 12 Gew.%, bezogen auf die Trockenmasse, enthält, und gegebenenfalls Vermiculit in einer Menge weniger als 20 Gew.-% bezogen auf die Trockenmasse mit der wahlweisen Zugabe von einem oder mehreren Dispergierungs- und Verdickungsmitteln, **dadurch gekennzeichnet,** daß die anorganischen, synthetischen Fasern auf Kohlenstoffbasis hydrophile Eigenschaften besitzen und eine rauhe Oberfläche aufweisen.

2. Poröse Masse nach Anspruch 1, in welcher das Verdickungsmittel Attapulgit in einer Menge von maximal 13 Gew.% ist.

3. Verfahren zur Herstellung der porösen Masse nach den Ansprüchen 1, 2, **gekennzeichnet** durch folgende Stufen:
a) Behandlung von Calciumoxid mit Wasser bei einer Temperatur von 20 bis 60°C;
b) Zugabe von anorganischen synthetischen Fasern auf der Basis von Kohlenstoff, gefolgt von Homogenisation;
c) wahlweise Zugabe von einem Dispergierungs- und Verdickungsmittel;
d) Zugabe von kritallinem Quarzmehl;
e) Backen der Masse bei 180°C; und
f) Trocknen bei 280°C,
wobei die Stufen b), c) und d) auch in unterschiedlicher Reihenfolge ausgeführt werden können.

4. Verfahren nach Anspruch 1, in welchem das Verhältnis von Calciumoxid zu kristallinem Quarzmehl zwischen 1:1 und 1:1,3, das Verhältnis von kristallinem Quarzmehl zu Vermiculit zwischen 1:0,5 und 1:0,09 und das Verhältnis von Attapulgit zu kristallinem Quarzmehl 1:2,6 ist.

## Revendications

1. Masse poreuse monolithique sans amiante, pour remplir des cylindres d'acétylène, la masse étant à base de silicate de calcium obtenu à partir de chaux et de poudre de quartz cristallin et contenant un liant constitué de fibres synthétiques inorganiques à base de carbone en une teneur inférieure ou égale à 12 % en poids par rapport à la masse sèche et, facultativement, de la vermiculite en une quantité inférieure à 20 % en poids par rapport à la masse sèche, avec l'addition facultative d'un ou plusieurs agents dispersants et densifiants, caractérisée en ce que lesdites fibres synthétiques inorganiques à base de carbone possèdent des propriétés hydrophiles et ont une surface rugueuse.

2. Masse poreuse selon la revendication 1, dans laquelle l'agent densifiant est l'attapulgite, en une quantité d'au plus 13 % en poids.

3. Procédé pour la préparation de la masse poreuse selon les revendications 1 et 2, caractérisé par les étapes suivantes :
a) traitement d'oxyde de calcium avec de l'eau à une température de 20 à 60 °C ;
b) addition de fibres synthétiques inorganiques à base de carbone, suivie d'une homogénéisation ;
c) addition facultative d'un agent dispersant et densifiant ;
d) addition d'une poudre de quartz cristallin ;
e) cuisson de la masse à 180 °C ; et
f) séchage à 280 °C,
dans lequel les étapes b), c) et d) peuvent aussi être effectuées dans des séquences différentes.

4. Procédé selon la revendication 3, dans lequel le rapport de l'oxyde de calcium à la poudre de quartz cristallin est entre 1:1 et 1:1,3, le rapport de la poudre de quartz cristallin à la vermiculite est entre 1:0,5 et 1:0,09, et le rapport de l'attapulgite à la poudre de quartz cristallin est 1:2,6.
